# EUROPÄISCHE PATENTANMELDUNG

(11) **EP 0 949 099 A2**
(43) Veröffentlichungstag der Anmeldung: **13.10.1999**
(21) Anmeldenummer: 99105060.0
(22) Anmeldetag: 23.03.1999
(51) Int. Cl.: B60H 1/34

(54) **Luftstromverteiler für einen Kraftfahrzeuginnenraum**

(30) Priorität: 09.04.1998 DE 19816013
(71) Anmelder: Volkswagen Aktiengesellschaft, 38436 Wolfsburg (DE)
(72) Erfinder: Rehmke, Thomas, 29392 Wesendorf (DE); Schwentner, Klaus, 38444 Wolfsburg (DE)

(57) **Zusammenfassung**

Die Erfindung betrifft einen Luftstromverteiler für einen Kraftfahrzeuginnenraum mit zwei an der Luftaustrittseite eines Luftströmungskanals hintereinander angeordneten Lamellenblöcken mit im wesentlichen parallel und im Abstand zueinander angeordneten Lamellen, wobei die Lamellen des einen Lamellenblockes jeweils um eine im wesentlichen horizontale und die des anderen jeweils um eine im wesentlichen vertikale Achse zur Veränderung des Ausströmwinkels des Luftstromes schwenkbar sind. Sie löst die Aufgabe, einen derartigen Luftstromverteiler kompakt und so zu gestalten, daß die Richtung des Luftstromes in starkem Maße veränderbar ist. Dazu sind die Lamellenblöcke (3; 4) an einem am Luftströmungskanal (1) quer zum Luftstrom angeordneten und drehbar gelagerten Dreheinsatz (2; 25) angeordnet. Die Lamellen der Lamellenblöcke (3; 4) sind schwenkbar am Dreheinsatz (2; 25) gehaltert, wobei dieser zur Betätigung des Lamellenblockes (3) und ein mit den Lamellen des Lamellenbockes (4) verbundenes Betätigungselement (23; 33) manuell oder elektromotorisch betätigbar sind.

## Beschreibung

Die Erfindung betrifft einen Luftstromverteiler für einen Kraftfahrzeuginnenraum nach dem Oberbegriff des Anspruchs 1, insbesondere zur Anordnung im Armaturenbrettbereich des Kraftfahrzeugs.

Luftstromverteiler dienen der Regulierung der Richtung und Ausbreitungsdichte eines vom Fahrtwind oder von einem Ventilator erzeugten und durch einen Luftströmungskanal in den Innenraum eines Kraftfahrzeugs geleiteten Luftstromes und sind an der Austrittsstelle desselben in dem Kraftfahrzeuginnenraum angeordnet.

Um den Luftstrom in vorbestimmten Grenzen in seiner Charakteristik und Ausströmungsrichtung verändern zu können, werden Lamellensysteme eingesetzt, die den Luftstorm in horizontaler und in vertikaler Ebene beeinflussen. Beispielsweise kann ein solches Lamellensystem aus hintereinander angeordneten und getrennt voneinander betätigbaren Blöcken von im wesentlichen parallel ausgerichteten Lamellen gebildet sein, von denen die Lamellen des einen Blockes um eine vertikale und die des anderen Blockes um eine horizontale Achse schwenkbar sind. Üblicherweise sind die um eine horizontale Achse schwenkbaren Lamellen am luftstromaustrittseitigen Ende, also fahrzeuginnenraumseitig, übereinander angeordnet, wobei die Lamellen einzeln und wiederum luftstromaustrittseitig schwenkbar gehaltert sind. Die Lamellenblöcke sind getrennt voneinander mit einer Bedienungshandhabe manuell betätigbar. Derartige Lösungen sind beispielsweise Gegenstand der DE 196 16 965 C1, der DE 36 10 188 C2 und der FR 27 10 879 A1.

Die fahrzeuginnenraumseitigen Lamellen können nach der DE 30 44 289 A1 aber auch an einem verdrehbaren Rundkörper angeordnet sein, der einen mit dem Luftströmungskanal verbundenen Innenraum aufweist, aus dem die Luft durch die Lamellen in den Fahrzeuginnenraum strömt. Die Lamellen sind parallel zur Drehachse des Ringkörpers, jedoch von der radialen Richtung ungleichmäßig abweichend, fest am Ringkörper (Dreheinsatz) angeordnet, wobei die Stellung der Lamellen kontinuierlich und nur wenig voneinander abweichend verändert ist, und können somit in Abhängigkeit von der Drehstellung des Ringkörpers die Richtung des Luftstromes gegenüber der Horizontalen verändern. Der Ringkörper ist mit einem seitlich neben diesem angeordneten Stellrad gekoppelt. Um die in Abhängigkeit von der gewünschten Richtung des Luftstromes erforderliche Stellung der Lamellen zu erhalten, muß das Stellrad gegebenenfalls einen großen Drehwinkelbereich durchlaufen.

Aus der DE-OS 21 28 987 ist ein Luftverteiler mit einem an einer Tragplatte verdrehbar gelagerten Lamellenblock bekannt, dessen Lamellen jalousieartig verschwenkbar sind. Zur Verschwenkung der Lamellen ist eine Lamelle mit einem Griff versehen, mit dem sich der Lamellenblock sowie die Lamellen unabhängig voneinander verschwenken lassen. In der DE 36 10 188 C2 und der DE 196 16 965 C1 sind Bedieneinheiten zur Betätigung einer Heizungsanlage in einem Fahrzeug mit mehreren mechanischen Bedienelementen beschrieben. Während die im zuerst erwähnte Dokument beschriebene Bedieneinheit separat von der Luftaustrittsdüse angeordnet ist, ist bei der im zweiten Dokument beschriebenen Bedieneinheit die mit verstellbaren Luftleitelementen versehene Luftaustrittsdüse zur Steuerung der in den Fahrzeuginnenraum austretenden Luftströmung integriert, und es sind einstückig angeformte Aufnahmeanordnungen für die Bedieneinheit vorgesehen.

Ferner ist aus der DE 31 10 949 C2 eine schwenkbare Luftklappe für Heizungs- und Belüstungsanlagen von Fahrzeugen bekannt, die mittels eines von einem Sollwert-Potentiometer steuerbaren Elektromotors verstellbar ist. Dabei weist der Elektromotor eine Antriebsschnecke auf, die mit einem mit einer an der Luftklappe angeordneten Schwenkwelle verbundenen Zahnrad in Wirkverbindung steht. Ein Hall-Geber dient zur Rückmeldung der Klappenstellung. Zahnrad, Elektromotor und Hall-Geber bilden eine Baueinheit.

Schließlich ist eine elektrische Bedieneinheit für eine Fahrzeug-Heiz-/ Klimaanlage Gegenstand der DE 41 35 363 A1. Diese weist ein joystickartiges Bedienelement auf, das in Schrittschaltlogik arbeitet und in vier Richtungen verschwenkbar ist. Mit Hilfe der Schrittschaltlogik ist es möglich, einen einzustellenden Sollwert oder eine Sollstellung einfach durch eine entsprechende Betätigungsdauer des Bedienelementes zu erreichen. Zur Sollwertanzeige kann eine separate Anzeigeeinheit (Display) vorgesehen sein. Mit diesem Bedienelement können in Verbindung mit wenigstens einem Umschalter die Temperatur, die Belüftungsintensität oder auch ein Klimatisierungs-Luftstrom verändert und eingestellt werden.

Es ist Aufgabe der Erfindung, einen Luftstromverteiler nach dem Oberbegriff des Anspruchs 1 zu schaffen, der kompakt und so gestaltet ist, daß die Richtung des Luftstromes in starkem Maße veränderbar ist.

Diese Aufgabe wird bei einem Luftstromverteiler nach dem Oberbegriff des Anspruchs 1 durch dessen kennzeichnende Merkmale und die des Anspruchs 11 gelöst.

Die Erfindung besteht darin, daß die in einem Luftströmungskanal hintereinander angeordneten Lamellenblöcke mit im wesentlichen parallel und im Abstand zueinander angeordneten Lamellen, wobei die Lamellen des einen Lamellenblockes jeweils um eine im wesentlichen horizontale und die des anderen jeweils um eine im wesentlichen vertikale Achse zur Veränderung des Ausströmwinkels des Luftstromes schwenkbar sind, an einem am Luftströmungskanal quer zum Luftstrom drehbar gelagerten Dreheinsatz angeordnet sind. Dadurch ergeben sich eine sehr kompakte Bauweise, eine vereinfachte Montage durch die Möglichkeit einer Vormontage der Lamellenblöcke mit dem Dreheinsatz und, in Abhängigkeit von der Anordnung der um eine zur Drehachse des Dreheinsatzes parallelen Achse schwenkbaren Lamellen am Dreheinsatz, auch eine rasche Anderung des Ausströmwinkels des Luftstromes.

Dabei können die Lamellen des luftaustrittseitigen Lamellenblockes luftaustrittseitig an der Peripherie des Dreheinsatzes schwenkbar gehaltert und rückseitig an wenigstens einem Verbindungsglied angelenkt sein. Dieses Verbindungsglied ist mit dem Dreheinsatz derart gekoppelt, daß es bei einer Verstellbewegung desselben eine gegenläufige Bewegung ausführt. Dadurch liegt die (fiktive) Schwenkachse für jede Lamelle im mittleren Bereich zwischen ihren Anlenkpunkten, so daß deren Stellwinkel bei einer Bewegung des Einsatzes in eine der beiden Richtungen erheblich größer ist und der Luftstrom wesentlich stärker abgelenkt werden kann. Damit wird auch gleichzeitig der Stellweg des Einsatzes für eine Lamellenverstellung erheblich verringert. Insgesamt wird die Variationsbreite der Belüftung erweitert.

Der Dreheinsatz kann entweder mit einem von Hand betätigbaren Stellrad gekoppelt oder mit einem Elektromotor verbunden sein.

Das Verbindungsglied kann mit einem Koppelglied in Eingriff stehen, das - wie der Dreheinsatz - an der Wandung des Luftströmungskanals drehbar gelagert und dessen Drehachse parallel zur Drehachse des Dreheinsatzes angeordnet ist, und das mit einem Zahnkranz mit einem am Dreheinsatz ausgebildeten Zahnkranz kämmt, derart, daß ein Zahnradtrieb gebildet ist. Alternativ dazu kann zwischen dem am Dreheinsatz ausgebildeten Zahnkranz und dem Zahnkranz des Koppelgliedes ein weiteres, am Luftströmungskanal drehbar gelagertes Zahnrad angeordnet sein, mit dem ein Zahnradtrieb gebildet ist.

Das Verbindungsglied und das Koppelglied stehen auf einfache Weise über eine an einem der beiden Glieder ausgebildete Ausnehmung und einen am jeweils anderen Glied angeordneten Zapfen miteinander in Eingriff.

Der Dreheinsatz kann käfigartig ausgebildet sein und quer zu seiner Längsachse zwei im Abstand angeordnete Stirnwandungen aufweisen, die durch wenigstens zwei einander gegenüberliegend angeordnete Stege miteinander verbunden sind. Diese Stege dienen der Halterung der Lamellen des der Luftaustrittseite abgewandten Lamellenblockes, wobei die Lamellen auf ihrer der Luftaustrittsöffnung des Luftstromverteilers zugewandten Seite schwenkbar angelenkt und zu ihrer gemeinsamen Verschwenkung rückseitig an einem betätigbaren Verbindungselement angelenkt sind.

Dieses Verbindungselement steht auf einfache Weise über einen Zapfen mit einem Betätigungsglied in Eingriff, das ein in im wesentlichen horizontaler Ebene angeordnetes und von Hand betätigbares Stellrad mit einer radial ausgebildeten Langloch-Ausnehmung für den Zapfen sein kann. Anstelle der Langloch-Ausnehmung kann das Stellrad auch mit einem drehbaren Zahnsegment versehen sein, das mit einem am Zapfen angeordneten Zahnsegment in Eingriff steht, wobei die Zähne der Zahnsegmente quer zur Richtung der Drehachse des Dreheinsatzes ausgebildet sind, und bei einer Drehung des Stellrades den Zapfen verschiebt. Dabei kann das am Zapfen angeordnete Zahnsegment gegenüber dem am Stellrad angeordneten Zahnsegment konvex ausgebildet sein.

Anstelle des Stellrades kann auch ein elektromotorisch angetriebenes Drehglied als Betätigungsglied mit einer entsprechenden Langloch-Ausnehmung oder einem entsprechendem Zahnsegment eingesetzt sein. Dieses Drehglied ist mit einem ansteuerbaren Elektromotor verbunden.

Zur Ansteuerung des mit dem Drehglied gekoppelten und des mit dem Dreheinsatz gekoppelten Elektromotors wird vorteilhaft ein Joystick verwendet, der entweder an einem die Luftaustrittsöffnung umgebenden Rahmen oder außerhalb desselben an der Instrumententafel, vorzugsweise an der Mittelkonsole angeordnet ist.

Der Joystick kann in zwei zueinander senkrechten Betätigungsebenen jeweils in zwei Richtungen betätigbar sein, derart, daß bei einer Betätigung in der horizontalen Ebene die vertikal angeordneten Lamellen und bei einer Betätigung in der vertikalen Ebene die horizontal angeordneten Lamellen angesteuert werden. Der Joystick kann neben der Ansteuerung der Lamellenblöcke zusätzlich zur Ansteuerung weiterer Bedienelemente und Anzeigen genutzt werden, die über eine oder mehrere Drucktasten gewählt werden können. Vorteilhaft ist es, wenn die Stellung der Lamellen der beiden Lamellenblöcke jeweils durch eine LED-Anzeige angezeigt wird und somit kontrollierbar ist. Diese LED-Anzeigen können zweckmäßigerweise in dem die Luftaustrittsöffnung umgebenden Rahmen angeordnet sein.

Die Erfindung wird nachstehend anhand von Ausführungsbeispielen erläutert. In der zugehörigen Zeichnung zeigen, teilweise schematisch:
- Fig. 1:: einen erfindungsgemäßen Luftstromverteiler in einer Seitenansicht,
- Fig. 2:: den Luftstromverteiler mit veränderter Luftausströmrichtung,
- Fig. 3:: eine Draufsicht auf einen Horizontalschnitt,
- Fig. 4:: eine andere Ausführungsform eines erfindungsgemäßen Luftstromverteilers,
- Fig. 5:: eine Seitenansicht dieser anderen Ausführungsform,
- Fig. 6:: eine perspektivische Darstellung der zusammenwirkenden Betätigungselemente für die senkrecht angeordneten Lamellen dieser anderen Ausführungsform und
- Fig. 7:: eine Draufsicht auf einen Horizontalschnitt der anderen Ausführungsform.

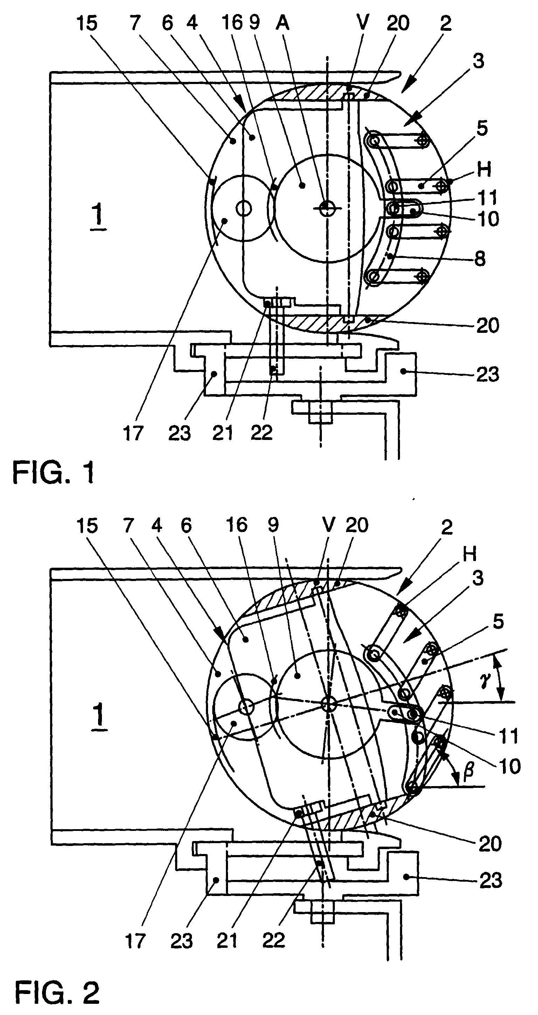

Fig. 1 zeigt einen Luftstromverteiler für einen Kraftfahrzeuginnenraum mit einem an einem Luftströmungskanal 1 quer zum Luftstrom drehbar gelagerten Dreheinsatz 2, an dem zwei Lamellenblöcke 3 und 4 hintereinander angeordnet sind. Der an der Seite des Luftaustritts in den Kraftfahrzeuginnenraum angeordnete Lamellenblock 3 ist aus parallel und im Abstand zueinander angeordneten und um jeweils eine horizontale Achse H schwenkbaren Lamellen 5 gebildet, und der dem Luftaustritt abgewandte Lamellenblock 4 ist aus parallel und im Abstand zueinander angeordneten und um eine vertikale Achse V schwenkbaren Lamellen 6 gebildet.

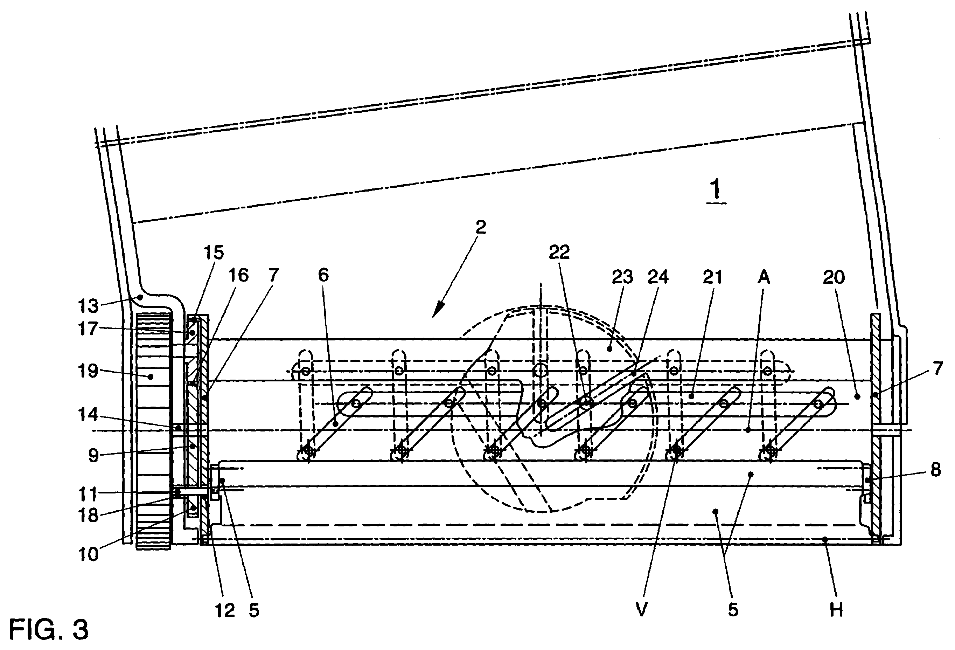

Die Lamellen 5 sind an quer zur Drehachse A ausgebildeten kreisrunden Wandungen 7 (Fig. 3) des Dreheinsatzes 2 luftaustrittseitig und peripher gelenkig gehaltert. Rückseitig sind die Lamellen 5 beidseitig an einem gemeinsamen Verbindungsglied 8 angelenkt, das über ein Koppelglied 9 mit dem Dreheinsatz 2 in Eingriff steht. Dazu weist dieses Koppelglied 9 eine Langloch-Ausnehmung 10 und das Verbindungsglied 8 einen in diese eingreifenden Zapfen 11 auf, wobei dieser durch eine Ausnehmung 12 in der Wandung 7 geführt ist. Die Ausnehmung 12 (Fig. 3) ist dabei so groß, daß eine Relativbewegung des Zapfens 11 zum Dreheinsatz 2 nicht behindert wird. Das Koppelglied 9 ist außerhalb des Dreheinsatzes 2 an einer vertikalen Wandung 13 des Luftströmungskanals 1 drehbar gelagert und zwar koaxial zum Dreheinsatz 2 auf dessen Lagerzapfen 14.

Die dem Koppelglied 9 zugewandte Wandung 7 des Dreheinsatzes 2 ist mit einem Zahnkranzabschnitt 15 versehen, der in einem dem Lamellenblock 3 gegenüberliegenden Abschnitt an der Peripherie an der dem Koppelglied 9 zugewandten Seite dieser Wandung 7 ausgebildet ist (Fig. 3). Zwischen dem Koppelglied 9, das auf der dem Lamellblock 3 abgewandten Seite einen Zahnkranzabschnitt 16 aufweist, und dem Zahnkranzabschnitt 15 ist ein an der Wandung 10 drehbar gelagertes Zahnrad 17 angeordnet, das mit beiden Zahnkranzabschnitten 15 und 16 in Eingriff steht.

Fig. 3 zeigt, daß der Zapfen 11 durch die Ausnehmung 12 des Dreheinsatzes 2 bis in einen in der Wandung 13 ausgebildeten Führungsschlitz 18 geführt ist. Dieser ist der Bewegungskurve des Zapfens 11 angepaßt und begrenzt dessen Bewegung und damit den Schwenkbereich des Dreheinsatzes 2.

Auf der dem Dreheinsatz 2 abgewandten Seite der Wandung 13 ist ein Stellrad 19 als Bedienungshandhabe angeordnet, das mit dem Lagerzapfen 14 drehfest verbunden ist.

Wird nun dieses Stellrad 19 beispielsweise um einen Winkel α gegen den Uhrzeigersinn gedreht, bewegt sich der Dreheinsatz 2 ebenfalls um diesen Winkel gegen den Uhrzeigersinn. Durch den Eingriff des Zahnkranzabschnittes 15 mit dem Zahnrad 17 wird dieses auch gegen den Uhrzeigersinn gedreht und bewegt auf der anderen Seite das Koppelglied 9 im Uhrzeigersinn, das wiederum das Verbindungsglied 8 bewegt. Dieses vollführt eine zum Dreheinsatz 2 gegenläufige Bewegung, die eine größere Schwenkbewegung der Lamellen 5 zur Folge hat (Schwenkwinkel β). Fig. 2 zeigt den Schwenkwinkel β als Ergebnis einer relativ geringfügigen Drehbewegung des Stellrades 19 um den Winkel α.

Die Verstellbewegung der Lamellen 5 ist in bekannter Weise über das Übersetzungsverhältnis des Zahnradtriebes und die Dimensionierung der zusammenwirkenden Glieder vorbestimmbar.

Die Lamellen 6 des Lamellenblockes 4 sind an gegenüberliegend angeordneten und die Wände 7 verbindenden Stegen 20 schwenkbar gehaltert und zu ihrer gemeinsamen Verschwenkung rückseitig an einem Verbindungselement 21 angelenkt. Dieses (21) weist einen Zapfen 22 auf, der mit einem Stellrad 23 in Eingriff steht, das zu diesem Zweck eine radial ausgebildete Langloch-Ausnehmung 24 aufweist (Fig. 3).

Wird das Stellrad 23 betätigt, wird die Langloch-Ausnehmung 24 verdreht. Dadurch wird der Zapfen 22 mitgenommen, der dabei in der Langloch-Ausnehmung 24 gleitet, und bewegt das Verbindungsglied 21, das seinerseits die Lamellen 6 verschwenkt.

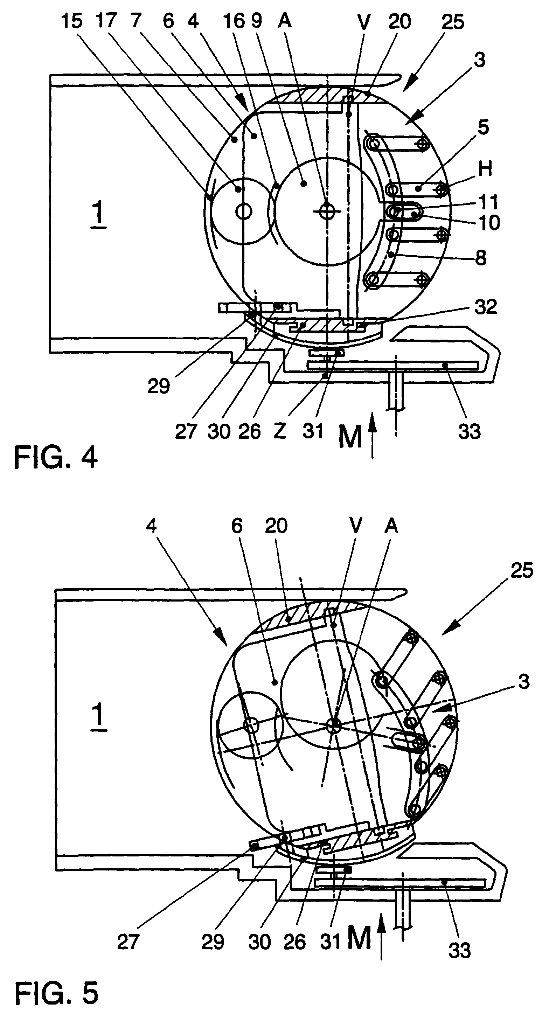

Die Fig. 4 und 5 zeigen eine weitere Ausführungsform eines erfindungsgemäßen Luftausströmers mit einem Dreheinsatz 25. Bei dieser ist die Ausbildung und Anordnung des luftaustrittseitigen Lamellenblockes im Dreheinsatz 25 gleich der des vorstehend beschriebenen Ausführungsbeispiels, weswegen bezüglich der Beschreibung desselben auf dieses verwiesen wird (gleiche Bezugszeichen). Die Betätigung des Dreheinsatzes erfolgt jedoch elektromotorisch über einen mit dem< Lagerzapfen des Dreheinsatzes 25 gekoppelten Elektromotor (nicht dargestellt). Fig. 5 zeigt eine gegenüber der Darstellung in Fig. 4 entgegen dem Uhrzeigersinn verdrehte Stellung des Dreheinsatzes 25.

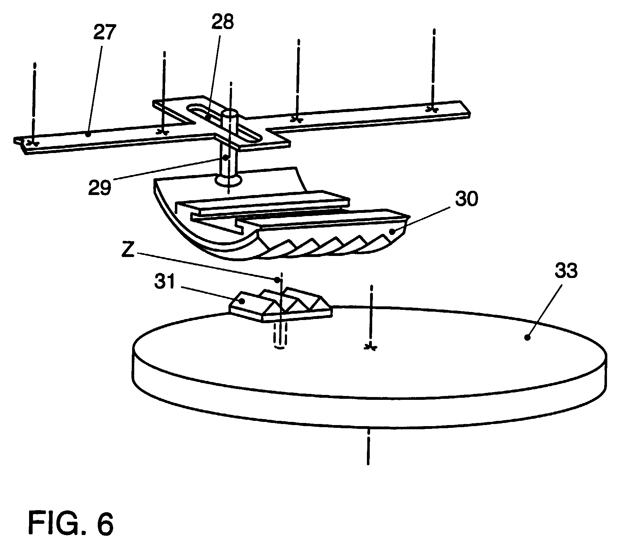

Der Dreheinsatz 25 weist senkrecht zu seiner Drehachse (A) angeordnete Stirnwandungen (7) auf , die durch einander gegenüberliegend angeordnete Stege 20 und 26 miteinander verbunden sind,<von denen der Steg 20 wie im vorher beschriebenen Ausführungsbeispiel ausgebildet ist. Die Lamellen 6 des der Luftaustrittseite abgewandten Lamellenblockes 4 sind zwischen diesen Stegen 20 und 26 angeordnet, luftaustrittseitig schwenkbar gehaltert (V) und zum gemeinsamen Verschwenken an der der Schwenkachse V abgewandten Seite der Lamellen 6 an einem Verbindungsglied 27 angelenkt. Dieses Verbindungsglied 27 weist eine quer zur Achse A angeordnete Langloch-Ausnehmung 28 für einen Zapfen 29 auf, der mit einem Zahnsegment 30 versehen ist, das mit einem Zahnsegment 31 in Eingriff steht und gegenüber diesem konvex ausgebildet ist, wobei die Zähne der beiden Zahnsegmente 30 und 31 quer zur Richtung der Drehachse A ausgebildet sind. Das Zahnsegment 30 ist in einer am Steg 26 ausgebildeten Prismenführung 32 geführt und parallel zur Drehachse A verschiebbar. Das Zahnsegment 31 ist an einem Drehglied 33 um eine horizontale Achse Z drehbar gelagert angeordnet (Fig. 6), und das Drehglied 33 ist mit der Abtriebswelle eines Elektromotors verbunden (durch Pfeil und 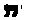 M" angedeutet).

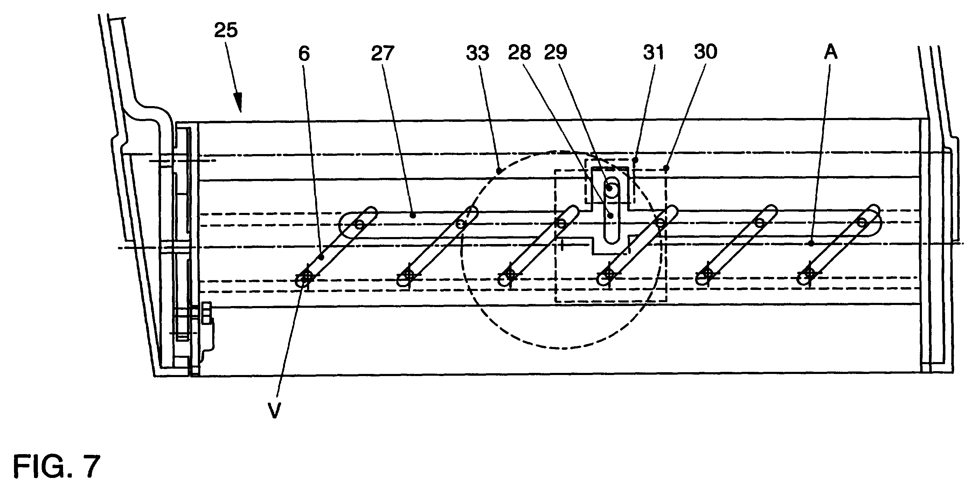

Fig. 7 zeigt, daß bei einer elektromotorisch veranlaßten Drehbewegung des Drehgliedes 33, beispielsweise im Uhrzeigersinn, das Zahnsegment 31 unter Beibehaltung der Ausrichtung der Zähne quer zur Achse A bewegt wird, wodurch das Zahnsegment 30 parallel zur Achse A verschoben wird. Dabei wird auch der mit dem Zahnsegment 30 fest verbundene Zapfen 29 parallel zur Achse verschoben. Das Verbindungsglied 27 wird bewegt und verschwenkt die an diesem angelenkten Lamellen 6. Der Zapfen 29 gleitet bei diesem Vorgang in der Langloch-Ausnehmung 28 (Fig. 7).

## Patentansprüche

1. Luftstromverteiler für einen Kraftfahrzeuginnenraum mit zwei an der Luftaustrittseite eines Luftströmungskanals hintereinander angeordneten Lamellenblöcken mit im wesentlichen parallel und im Abstand zueinander angeordneten Lamellen, wobei die Lamellen des einen Lamellenblockes jeweils um eine im wesentlichen horizontale und die des anderen jeweils um eine im wesentlichen vertikale Achse zur Veränderung des Ausströmwinkels des Luftstromes schwenkbar sind, **dadurch gekennzeichnet,** daß die Lamellenblöcke (3; 4) an einem am Luftströmungskanal (1) quer zum Luftstrom angeordneten und drehbar gelagerten Dreheinsatz (2; 25) angeordnet sind.

2. Luftstromverteiler nach Anspruch 1, **dadurch gekennzeichnet,** daß die Lamellen (5) des luftaustrittseitigen Lamellenblockes (3) luftaustrittseitig an der Peripherie des Dreheinsatzes (2; 25) jeweils um eine parallel zu dessen Drehachse (A) verlaufende Achse (H) schwenkbar gehaltert und rückseitig an wenigstens einem Verbindungsglied (8) angelenkt sind, das mit dem Dreheinsatz (2; 25) derart gekoppelt ist, daß es bei einer Verstellbewegung desselben eine gegenläufige Bewegung ausführt.

3. Luftstromverteiler nach Anspruch 2, **dadurch gekennzeichnet,** daß der Dreheinsatz (2) mit einem Stellrad (19) gekoppelt ist.

4. Luftstromverteiler nach Anspruch 2, **dadurch gekennzeichnet,** daß das Verbindungsglied (8) mit einem Koppelglied (9) in Eingriff steht, das am Luftströmungskanal (1) drehbar gelagert und dessen Drehachse parallel zur Drehachse (A) des Dreheinsatzes (2) angeordnet ist, und daß der Dreheinsatz (2; 25) mit einem im Abstand zu seiner Drehachse (A) ausgebildeten Zahnkranz in einem am Koppelglied (9) ausgebildeten Zahnkranz, eine Zahnradtrieb bildend, eingreift, oder daß zwischen dem am Dreheinsatz (2; 25) ausgebildeten Zahnkranz (15 ) und einem am Koppelglied (9) ausgebildeten Zahnkranz (16) ein weiteres, am Luftströmungskanal (1) drehbar gelagertes Zahnrad (17), einen Zanhnradtrieb bildend, angeordnet ist.

5. Luftstromverteiler nach Anspruch 4, **dadurch gekennzeichnet,** daß das Verbindungsglied (8) und das Koppelglied (9) über eine an einem der beiden Glieder (8; 9) ausgebildete Ausnehmung (10) und einen am jeweils anderen Glied (9; 8) angeordneten Zapfen (11) miteinander in Eingriff stehen.

6. Luftstromverteiler nach Anspruch 1, **dadurch gekennzeichnet,** daß der Dreheinsatz (2) quer zu seiner Drehachse (A) zwei im Abstand angeordnete Stirnwandungen (7) aufweist, die durch einander gegenüberliegend angeordnete Stege (20) miteinander verbunden sind, und daß die Lamellen (6) des der Luftaustrittseite abgewandten Lamellenblockes (4) luftaustrittseitig jeweils zwischen diesen Stegen (20) angeordnet und an diesen luftaustrittseitig gehaltert und zu ihrer gemeinsamen Verschwenkung rückseitig an einem betätigbaren Verbindungselement (21) angelenkt sind.

7. Luftaustromverteiler nach Anspruch 6, **dadurch gekennzeichnet,** daß das Verbindungselement (21) einen Zapfen (22) aufweist, der mit einem Betätigungselement (Stellrad 23) in Eingriff steht.

8. Luftstromverteiler nach Anspruch 6 oder 7, **dadurch gekennzeichnet,** daß das Betätigungselement ein in im wesentlichen horizontaler Ebene angeordnetes Stellrad (23) ist, das eine radial ausgebildete Langloch-Ausnehmung (24) für den Zapfen (22) aufweist.

9. Luftstromverteiler nach Anspruch 6, **dadurch gekennzeichnet,** daß das Verbindungselement über einen Zapfen (29) mit einem Betätigungselement in Wirkverbindung steht, das ein in im wesentlichen horizontaler Ebene angeordnetes Stellrad (33) ist, das ein drehbar gelagertes Zahnsegment (31) aufweist, das mit einem mit dem Zapfen (29) verbundenen Zahnsegment (30) in Eingriff steht, wobei das letztere Zahnsegment (30) gegenüber dem ersteren (31) konvex ausgebildet ist und die Zähne der Zahnsegmente (30:31) quer zur Richtung der Drehachse (A) ausgebildet sind.

10. Luftstromverteiler nach einem der vorhergehenden Ansprüche, **dadurch gekennzeichnet,** daß der Luftströmungskanal (1) luftaustrittseitig von einem Rahmen umgeben ist, in dem Ausnehmungen zur Betätigung der Stellräder (19; 23; 33) angeordnet sind.

11. Luftstromverteiler für einen Kraftfahrzeuginnenraum mit zwei an der Luftaustrittseite eines Luftströmungskanals hintereinander angeordneten Lamellenblöcken mit im wesentlichen parallel und im Abstand zueinander angeordneten Lamellen, wobei die Lamellen des einen Lamellenblockes jeweils um eine im wesentlichen vertikale Achse zur Veränderung des Ausströmwinkels des Luftstromes schwenkbar sind, **dadurch gekennzeichnet,** daß die Lamellenblöcke (3; 4) an einem am Luftströmungskanal (1) quer zum Luftstrom angeordneten und drehbar gelagerten Dreheinsatz (25) angeordnet sind, daß die Lamellen (6) des der Luftaustrittseite abgewandten Lamellenblockes (4) senkrecht zur Drehachse (A) des Dreheinsatzes (25) schwenkbar an diesem gehaltert und zum gemeinsamen Verschwenken an einem durch ein Betätigungselement (23; 33) betätigbaren Verbindungselement (27) angelenkt sind, und daß der Dreheinsatz (25) und das Betätigungselement (23; 33) elektromotorisch betätigbar sind.

12. Luftstromverteiler nach Anspruch 11, **dadurch gekennzeichnet,** daß der Dreheinsatz (25) senkrecht zu seiner Drehachse (A) angeordnete Stirnwandungen (7) aufweist, die durch einander gegenüberliegend angeordnete Stege (20; 26) miteinander verbunden sind, und daß die Lamellen (6) des der Luftaustrittseite abgewandten Lamellenblockes (4) zwischen diesen Stegen (20; 26) angeordnet und luftaustrittseitig schwenkbar gehaltert sind, und daß das Verbindungselement (27) an der der Schwenkachse (V) abgewandten Seite der Lamellen (6) an diesen angelenkt ist.

13. Luftstromverteiler nach Anspruch 12, **dadurch gekennzeichnet,** daß das Verbindungselement (27) über einen Zapfen (29) mit dem Betätigungselement (33) in Wirkverbindung steht.

14. Luftstromverteiler nach Anspruch 13, **dadurch gekennzeichnet,** daß das Betätigungselement (33) ein in im wesentlichen horizontaler Ebene angeordnetes Drehglied ist, das ein drehbar gelagertes Zahnsegment (31) aufweist, das mit einem mit dem Zapfen (29) verbundenen Zahnsegment (30), das gegenüber ersterem konvex ausgebildet ist, in Eingriff steht, wobei die Zähne der Zahnsegmente (30; 31) quer zur Richtung der Drehachse (A) ausgebildet sind.

15. Luftstromverteiler nach einem der Ansprüche 11 bis 14, **dadurch gekennzeichnet,** daß der Dreheinsatz (25) und das Betätigungselement (33) jeweils mit einem ansteuerbaren Elektromotor verbunden sind.

16. Luftstromverteiler nach Anspruch 16, **dadurch gekennzeichnet,** daß zur Ansteuerung der Elektromotoren ein Joystick vorgesehen ist, der entweder in einem die Luftaustrittsöffnung umgebenden Rahmen oder außerhalb desselben an der Instrumententafel, vorzugsweise der Mittelkonsole, angeordnet ist.

17. Luftstromverteiler nach Anspruch 16, **dadurch gekennzeichnet,** daß der Joystick in zwei zueinander senkrechten Betätigungsebenen in jeweils zwei Richtungen betätigbar ist, derart, daß bei einer Betätigung in der horizontalen Ebene die vertikal angeordneten Lamellen (6) und bei einer Betätigung in der vertikalen Ebene die horizontal angeordneten Lamellen (5) verstellt werden.

18. Luftausströmer nach Anspruch 16 oder 17, **dadurch gekennzeichnet,** daß die Stellung der Lamellen (5; 6) der beiden Lamellenblöcke (3; 4) jeweils durch eine LED-Anzeige kontrollierbar ist, und daß die beiden LED-Anzeigen vorzugsweise in einemdie Luftaustrittsöffnung umgebenden Rahmen angeordnet sind.
